# EUROPÄISCHE PATENTSCHRIFT

(11) **EP 2 115 752 B1**
(45) Veröffentlichungstag und Bekanntmachung des Hinweises auf die Patenterteilung: **27.02.2013**
(21) Anmeldenummer: 08737583.8
(22) Anmeldetag: 21.01.2008
(51) Int. Cl.: H01C 10/30, H01C 10/32, H01B 7/30

(54) **POTENTIOMETER, PROTHESE UMFASSEND DIESES POTENTIOMETER UND VERFAHREN ZUM ERMITTELN EINER WINKELLAGE EINES BAUTEILS MITTELS DES POTENTIOMETERS**
POTENTIOMETER, PROTHESIS COMPRISING SAID POTENTIOMETER AND METHOD USING SAID POTENTIOMETER FOR DETERMINATION OF AN ANGULAR POSITION OF A COMPONENT
POTENTIOMETRE, PROTHESE COMPRENANT CE POTENTIOMETRE ET METHODE POUR DETERMINER LA POSTION ANGULAIRE D'UN COMPOSANT AU MOYEN DE CE POTENTIOMETRE

(30) Priorität: 24.01.2007 DE 102007004536; 28.03.2007 DE 102007014751
(43) Veröffentlichungstag der Anmeldung: 11.11.2009
(73) Patentinhaber: Otto Bock Healthcare Products GmbH, 1070 Wien (AT)
(72) Erfinder: INSCHLAG, Josef, A-8251 Bruck an der Lafnitz (AT); EDER, Marcus, A-1090 Wien (AT)
(74) Vertreter: Plöger, Jan Manfred
(86) Internationale Anmeldenummer: PCT/IB2008/001100
(87) Internationale Veröffentlichungsnummer: WO 2008/090478

(56) Entgegenhaltungen:
- EP-A- 1 688 970
- DE-A1- 3 427 000
- DE-A1- 19 649 906
- DE-A1- 19 816 683
- DE-A1-102005 021 890
- DE-T2- 60 300 688
- DE-U1- 29 812 976

## Beschreibung

Die Erfindung betrifft ein Potentiometer, eine Prothese umfassend dieses Potentiometer, sowie ein Verfahren zum Ermitteln der Winkellage eines Bauteils mittels dieses Potentiometers. Potentiometer werden häufig zur Messung von Winkellagen eingesetzt, das heißt zur Ermittlung einer Verdrehung eines Körpers relativ zu einem anderen. Damit alle Winkellagen gemessen werden können, also kein Totwinkel entsteht, ist es notwendig, Modifikationen gegenüber herkömmlichen Potentiometern vorzunehmen. Ein Potentiometer ohne Totwinkel ist beispielsweise in der koreanischen Offenlegungsschrift KR 10 2001 099265 A offenbart. Nachteilig an dem dort offenbarten Potentiometer ist, dass es schlecht kapselbar ist. Es ist daher anfällig für Verschmutzung. Ein weiterer Nachteil ist, dass beide Teile des Potentiometers stromführend sind und das Potentiometer daher fehleranfällig ist.

Aus der DE 34 27 000 C2 ist ein gattungsgemäßes Potentiometer bekannt, bei dem zwei Schleifer miteinander und mit einem Endverstärker verbunden sind, Ein mittels der beiden Schleifer in die Segmente eingeprägter elektrischer Strom wird von den Segmenten, die durch den Schleifer kontaktiert werden, zu einem weiteren Segment geleitet und von dort aus Lautsprechern zugeführt.

Nachteilig an dem dort beschriebenen Potentiometer ist, dass die Schleifkontakte in einem Drehpunkt mit der Stromquelle verbunden werden müssen. Ein sich in diesem Punkt ändernder elektrischer Widerstand führt zu einem systematischen Messfehler. Nachteilig ist zudem, dass das Potentiometer nur in einem Winkelbereich von 0 bis 180° betreibbar ist. Es ist daher bei Anwendungen nicht verwendbar, bei denen beliebige Winkel einstellbar sein müssen.

Aus der DE 10 2005 021 890 A1 ist ein Potentiometer bekannt, das drei konzentrische Leiter besitzt. Über zwei drehbar gelagerte Arme können jeweils zwei Leiter miteinander verbunden werden. Der mittlere der drei Leiter weist einen erhöhten elektrischen Widerstand auf, so dass aus dem elektrischen Widerstand zwischen dem äußeren und dem inneren elektrischen Leiter auf eine Drehposition der Arme geschlossen werden kann. Nachteilig an dem Potentiometer ist dessen komplexer Aufbau.

Aus der DE 43 39 931 C 1 ist ein Positionsgeber für den Gangwählhebel eines Kraftfahrzeuggetriebes bekannt. Nachteiligkeit an dem Positionsgeber ist, dass er nicht zum Erfassen einer Drehbewegung geeignet ist.

Der Erfindung liegt die Aufgabe zugrunde, ein robustes Potentiometer vorzuschlagen, mit dem die Winkellage eines Bauteils in allen Winkeln erfassbar ist.

Die Erfindung löst das Problem durch ein Potentiometer gemäß Anspruch 1, eine Prothese gemäβ Anspruch 14 und ein Verfahren gemäβ Anspruch 15.

Vorteilhaft an dem erfindungsgemäßen Potentiometer ist, dass kein Strom und auch keine Spannung von einem drehbar gelagerten Bauteil abgegriffen werden müssen. Es ist möglich, entweder nur die Segmente oder nur die Verbindungsvorrichtung elektrisch zu kontaktieren. Dadurch wird das Potentiometer besonders robust. Ein weiterer Vorteil ist, dass es einfach herstellbar und damit kostengünstig zu fertigen ist. Es ist zudem möglich, das Potentiometer offen zu bauen.

Vorteilhaft ist zudem, dass es in einer flachen Bauweise gefertigt werden kann. Ein weiterer Vorteil ist, dass das Potentiometer so kapselbar ist, dass innerhalb der Kapselung keine drehbar gelagerten Komponenten notwendig sind. Es wird so ein unter Wasser leicht einsetzbares, störungsresistentes Potentiometer erhalten.

Im Rahmen der vorliegenden Erfindung ist es möglich, nicht aber notwendig, dass die Verbindungsvorrichtung genau zwei Kontaktpunkte miteinander elektrisch verbindet. Möglich ist beispielsweise auch, dass die Verbindungsvorrichtung genau drei Kontaktpunkte miteinander verbindet. Es ist zudem möglich, nicht aber notwendig, dass die Verbindungsvorrichtung die Kontaktpunkte dauerhaft miteinander verbindet. So ist eine Verbindungsvorrichtung einsetzbar, bei der zeitweise kein Kontaktpunkt kontaktiert wird. Die Verbindungsvorrichtung kann die beiden Kontaktpunkte elektrisch überbrücken, das heißt mit einem im Vergleich zu sonstigen elektrischen Widerständen des Potentiometers kleinen Widerstand verbinden und so als Überbrückungsvorrichtung fungieren. Die Verbindungsvorrichtung kann aber auch die Kontaktpunkte dadurch verbinden, dass die Verbindungsvorrichtung an einem externen Stromkreis anschließbar ist, so dass ein Strom durch beide Kontaktpunkte fließt, In diesem Fall kann die Verbindungsvorrichtung so ausgebildet sein, dass die beiden Kontaktpunkte elektrisch gegeneinander isoliert sind, wenn die Verbindungsvorrichtung nicht mit dem externen Stromkreis verbunden ist.

Unter einer ringförmig geschlossenen Anordnung der Segmente wird insbesondere verstanden, dass die so angeordneten Segmente im mathematischen Sinne ein nicht einfach zusammenhängendes Gebiet bilden. Das Gebiet kann beispielsweise zweifach zusammenhängend sein. Es ist dazu möglich, nicht aber notwendig, dass die ringförmige Anordnung in der Mitte ein Loch aufweist. Es ist vielmehr ausreichend, wenn die Segmente eine solche ringförmige Anordnung bilden, dass der Strom in guter Näherung nicht durch eine Mitte zwischen den Segmenten hindurchfließt.

Unter einer Stromquelle wird insbesondere eine Vorrichtung verstanden, mittels der ein elektrischer Strom einer vorgegebenen Spannung oder eines vorgegebenen Stroms an zwei Kontakte angelegt werden kann.

Erfindungsgemäß bilden die Segmente eine geschlossene insbesondere eine ringförmig geschlossene Anordnung. Auf diese Weise wird ein Drehpotentiometer erhalten, das besonders gut zum Messen von Winkel eingesetzt werden kann. Es ist jedoch nicht notwendig, dass die Segmente eine geschlossene Anordnung bilden. Es ist vielmehr auch möglich, dass die Segmente hintereinander angeordnet sind und damit eine Reihe bilden.

Bevorzugt umfasst das Potentiometer elektrische Kontakte, über die ein durch alle Segmente fließender elektrischer Strom einprägbar ist. Es ist nicht notwendig, dass der Strom, der über die elektrischen Kontakte eingeprägt wird, stets durch alle Segmente fließt. Es ist beispielsweise möglich, dass die Verbindungsvorrichtung in einer Stellung ein gesamtes Segment überbrückt, so dass der elektrische Strom durch dieses Segment nicht oder nur zu einem verschwindend geringen Anteil fließt. Es ist insbesondere ausreichend, dass eine Stellung der Verbindungsvorrichtung existiert, in der über das Paar elektrischer Kontakte ein durch alle Segmente fließender elektrischer Strom einprägbar ist.

In einer bevorzugten Ausführungsform sind die Kontaktseiten eben und liegen in einer gemeinsamen Kontaktseitenebene. In anderen Worten bedeutet das, dass die Segmente so aneinander anschließen, dass sie eine durchgehende glatte gemeinsame Fläche bilden. In diesem Fall kann die Verbindungsvorrichtung besonders einfach über die gemeinsame Kontaktseitenebene gleiten.

In einer bevorzugten Ausführungsform grenzt jedes Segment an genau zwei Nachbarn bündig an. Es ergibt sich so eine ringförmig geschlossene Anordnung. Besonders ist dabei jedes Segment mit beiden Nachbarn an den Stellen elektrisch verbunden, an denen sie bündig aneinander angrenzen. Es ist jedoch nicht notwendig, dass jedes Segment an genau zwei Nachbarn angrenzt.

In einer bevorzugten Ausführungsform bilden die Segmente Kreisringsegmente. Diese Kreisringsegmente bilden einen geschlossenen Ring mit einer Ringbreite, die der Differenz zwischen Außenradius und Innenradius entspricht. Jedes Kreissegment hat dann zwei teilkreisförmig gebogene Begrenzungen und zwei gradlinig verlaufende Begrenzungen, wobei die Verlängerungen der gradlinig verlaufenden Begrenzungen sich in einem Mittelpunkt des Kreisrings treffen.

Besonders bevorzugt sind die Segmente jeweils gleich groß. Hierdurch wird ein besonders einfach zu fertigender Aufbau erhalten. Es ist bevorzugt, dass der spezifische elektrische Widerstand in einem Segment konstant ist. Der spezifische elektrische Widerstand gibt den elektrischen Widerstand an, der zwischen zwei Kontaktpunkten des Segments eines vorgegebenen Abstands anliegt. Besonders bevorzugt sind die spezifisch elektrischen Widerstände zweier benachbarter Segmente unterschiedlich. Die Größe des Unterschieds beträgt dabei beispielsweise mehr als 10 Prozent, bevorzugt aber mehr als 100 Prozent. Es ist auch möglich, dass der spezifische elektrische Widerstand zweier benachbarter Segmente ein Vielfaches voneinander beträgt.

Besonders bevorzugt ist der spezifische elektrische Widerstand in allen Segmenten unterschiedlich. Hierdurch kann aus Messungen von Spannungen zwischen einzelnen Segmenten besonders einfach die Drehposition der Verbindungsvorrichtung ermittelt werden.

Besonders bevorzugt überbrückt die Verbindungsvorrichtung genau zwei Kontaktpunkte, so dass zwischen den beiden Kontaktpunkten ein im Vergleich zu sonstigen Widerständen des Potentiometers kleiner Widerstand besteht. Es ergibt sich ein besonders leicht auswertbares Spannungssignal zur Ermittlung einer Winkelstellung der Verbindungsvorrichtung.

Besonders bevorzugt ist die Verbindungsvorrichtung in einem Drehpunkt drehbar gelagert, wobei der Drehpunkt mit dem Kreisringmittelpunkt zusammenfällt. Auf diese Weise kann ein von dem Potentiometer ermitteltes Spannungsergebnis besonders leicht in einen Drehwinkel umgerechnet werden, den die Verbindungsvorrichtung um den Drehpunkt durchgeführt hat.

In einer bevorzugten Ausführungsform ist die Verbindungsvorrichtung ausgebildet, um Kontaktpunkte zum elektrischen Verbinden von Kontaktpunkten der Segmente herzustellen, wobei jeweils zwei Kontaktpunkte bezüglich des Drehpunkts um einen Spreizwinkel versetzt sind und wobei mindestens ein Spreizwinkel so groß ist, dass die zugehörigen Kontaktpunkte nicht in einem Segment liegen können. Hierdurch werden vorteilhafterweise Zweideutigkeiten vermieden, so dass aus am Potentiometer gemessenen Spannungen stets eindeutig die Drehposition der Verbindungsvorrichtung ermittelt werden kann.

Bevorzugt umfasst die Verbindungsvorrichtung einen geschlossenen, flexiblen Leiter, der so zu den elektrisch leitenden Segmenten angeordnet ist, dass er durch Druck in einem Kontaktpunkt mit einem der Segmente in elektrischen Kontakt bringbar ist. Dazu wird beispielsweise ein flexibler elektrischer Leiter räumlich von den Kontaktseiten der Segmente beabstandet angeordnet. Durch Druck in dem Kontaktpunkt verformt sich der flexible Leiter und kommt in Kontakt mit der Kontaktseite des Segments, Wird an einer zweiten Stelle ebenfalls ein Druck auf den flexiblen Leiter aufgebracht, so gelangt der flexible Leiter an zwei Stellen in Kontakt mit Segmenten und stellt so einen elektrischen Kontakt zwischen beiden her. Der flexible Leiter weist vorzugsweise einen geringen elektrischen Widerstand auf. Beispielsweise ist der spezifisch elektrische Widerstand des flexiblen Leiters klein gegenüber dem spezifisch elektrischen Widerstand der Segmente.

Die Segmente und Teile der Verbindungsvorrichtung, insbesondere der flexible Leiter, sind von einer flexiblen Umhüllung flüssigkeitsdicht umgeben. So wird vorteilhafterweise ein flüssigkeifsdichtes Potentiometer erhalten, das zur. Herstellung eines flüssigkeitsfesten Drehsensors verwendet werden kann.

Bevorzugt umfasst das Potentiometer eine Koppeleinheit zum Aufbringen eines Drucks auf den flexiblen Leiter in mindestens zwei Kontaktpunkten. Diese Koppeleinheit ist beispielsweise Teil der Verbindungsvorrichtung. Beispielsweise ist die Koppeleinrichtung drehbar gelagert, so dass ein Verdrehen der Koppeleinrichtung dazu führt, dass der flexible Leiter an zwei sich verändernden Kontaktpunkten den ersten Kontaktpunkt in dem ersten Segment mit dem zweiten Kontaktpunkt in dem zweiten Segment verbindet. Auf diese Weise kann eine Drehstellung der Koppeleinrichtung auch in Flüssigkeitsumgebungen erfasst werden, die Segmente von einer flüssigkeitsdichten Umhüllung umgeben sind.

Erfindungsgemäß ist zwischen jeweils zwei Segmenten stets ein elektrischer Kontakt angeordnet. Über diesen elektrischen Kontakt ist eine elektrische Spannung abgreifbar, die über das Segment abfällt.

Bevorzugt umfasst das Potentiometer eine Spannungsermittlungsvorrichtung und eine Steuerung, die ausgebildet ist zum Verbinden von jeweils zwei Kontakten mit einer Stromquelle und zwei Kontakten mit der Spannungsermittlungsvorrichtung. Die Steuerung ist dabei dazu ausgebildet, ein erfindungsgemäßes Verfahren, wie es weiter unten beschrieben ist, durchzuführen. Bei den Kontakten kann es sich um mit Segmenten verbundene Kontakte oder um Kontakte der Verbindungsvorrichtung handeln.

In einer bevorzugten Ausführungsform verbindet die Verbindungsvorrichtung den ersten Kontaktpunkt in dem ersten Segment mit dem zweiten Kontaktpunkt in dem vom ersten Segment verschiedenen zweiten Segment und genau einem dritten Kontaktpunkt. Dieser dritte Kontaktpunkt liegt besonders bevorzugt stets in einem von dem ersten und zweiten Segment verschiedenen dritten Segment. Besonders günstig ist der Einsatz eines erfindungsgemäßen Potentiometers als Drehwinkelsensor in einer Prothese wie einer Arm- oder Handprothese. Durch die Kapselbarkeit kann die Prothese auch unter Wasser eingesetzt werden.

Ein erfindungsgemäßes Verfahren umfasst bevorzugt den Schritt des Anlegens des elektrischen Stroms an ein zweites Paar elektrischer Kontakte, nachdem an dem ersten Paar elektrischer Kontakte eine erste Spannung ermittelt worden ist.

Dadurch ist das Verfahren mit nur einer Stromquelle und nur einer Spannungsermittlungsvorrichtung durchführbar. Insbesondere umfasst das Verfahren das Ermitteln von Endspannungen zwischen Endpaaren elektrischer Kontaktierungen, wobei n > 1 gilt und wobei die n Paare so gewählt sind, dass jede Drehposition der Verbindungsvorrichtung genau einer Kombination der Endspannungen entspricht. Hierdurch kann aus den gemessenen Spannungen auf eindeutige Weise die Drehposition der Verbindungsvorrichtung zugeordnet werden.

Das erfindungsgemäße Potentiometer kann eine Verbindungsvorrichtung aufweisen, die an zwei, drei, vier oder fünf Kontaktstellen mit den Segmenten in Kontakt steht. Besonders einfach aufgebaute Ausführungsformen kommen jedoch mit zwei oder drei Kontaktstellen aus.

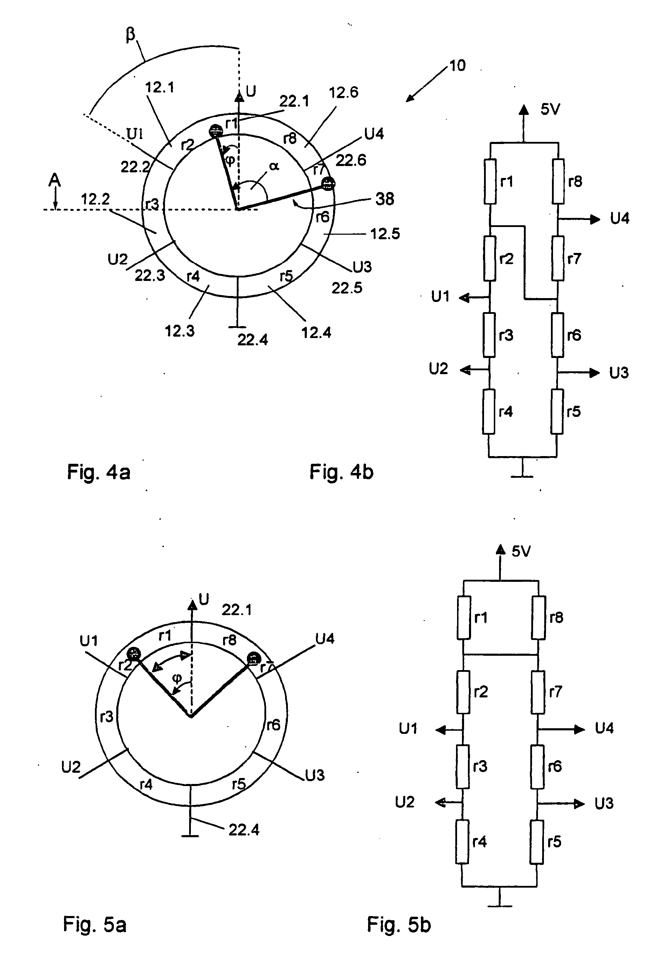

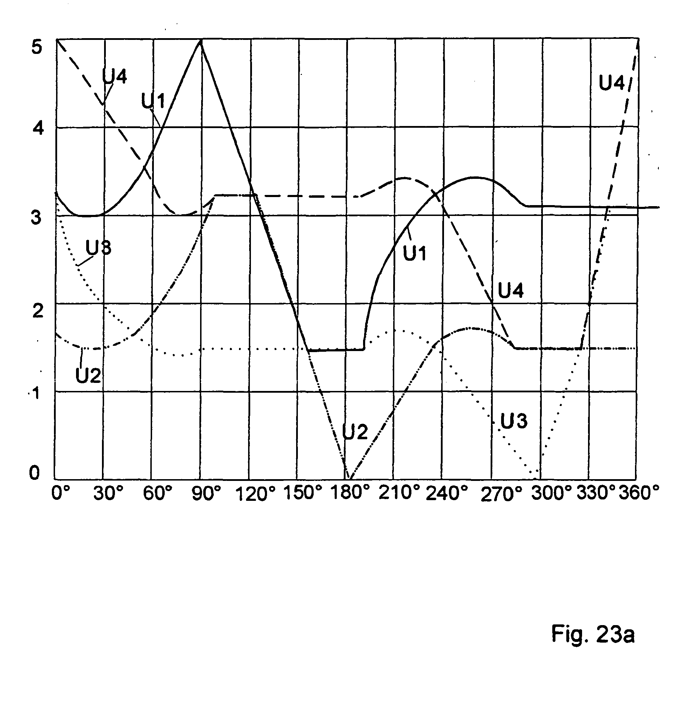

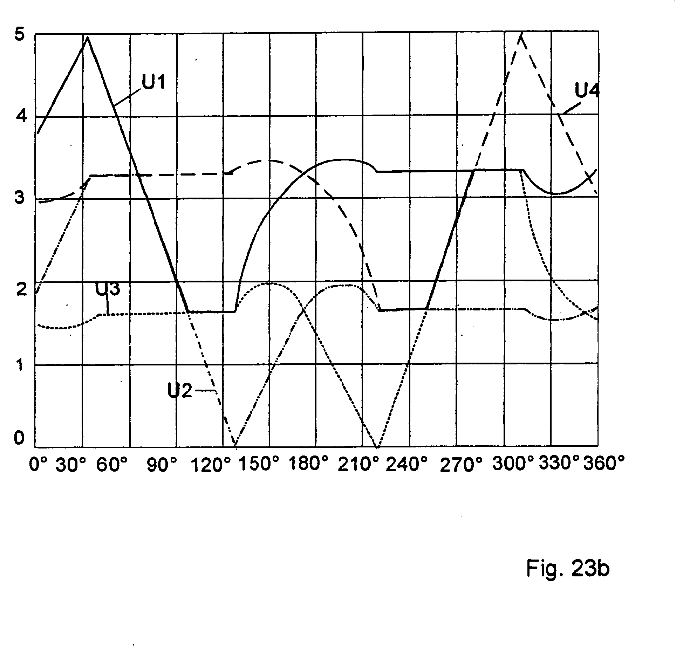

Im Folgenden werden Ausführungsbeispiele die Erfindung anhand der beigefügten Zeichnungen näher beschrieben. Es zeigt
- Figur 1a: eine schematische Ansicht eines ersten erfindungsgemäßen Potentiometers mit drei Segmenten und einer Verbindungsvorrichtung in einer ersten Stellung,
- Figur 1b: ein Ersatzschaltbild des Potentiometers gemäß Figur 1a,
- Figur 2a: das Potentiometer nach Figur 1a mit einer anderen Stellung der Verbindungsvorrichtung,
- Figur 2b: das Ersatzschaltbild für das Potentiometer mit der in Figur 2a gezeigten Stellung,
- Figur 3a: das Potentiometer aus den Figuren 1a und 2a mit einer dritten Stellung der Verbindungsvorrichtung, und
- Figur 3b: das zu Figur 3a gehörige Ersatzschaltbild.
- Figur 4a: zeigt eine zweite Ausführungsform eines erfindungsgemäßen Potentiometers mit sechs Segmenten, bei dem die Verbindungsvorrichtung in einer ersten Position ist und
- Figur 4b: zeigt das zugehörige Ersatzschaltbild.
- Figur 5a: zeigt das Potentiometer nach Figur 4a, bei dem die Verbindungsvorrichtung in einer zweiten Position ist und
- Figur 5b: zeigt das zugehörige Ersatzschaltbild.
- Figur 6a: zeigt das Potentiometer nach Figur 4a, bei dem die Verbindungsvorrichtung in einer dritten Position ist und
- Figur 6b: zeigt das zugehörige Ersatzschaltbild.
- Figur 7a: zeigt das Potentiometer nach Figur 4a, bei dem die Verbindungsvorrichtung in einer vierten Position ist und
- Figur 7b: zeigt das zugehörige Ersatzschaltbild.
- Figur 8a: zeigt das Potentiometer nach Figur 4a, bei dem die Verbindungsvorrichtung in einer fünften Position ist und
- Figur 8b: zeigt das zugehörige Ersatzschaltbild.
- Figur 9a: zeigt das Potentiometer nach Figur 4a, bei dem die Verbindungsvorrichtung in einer sechsten Position ist und
- Figur 9b: zeigt das zugehörige Ersatzschaltbild.
- Figur 10a: zeigt das Potentiometer nach Figur 4a, bei dem die Verbindungsvorrichtung in einer siebten Position ist und
- Figur 10b: zeigt das zugehörige Ersatzschaltbild.
- Figur 11a: zeigt das Potentiometer nach Figur 4a, bei dem die Verbindungsvorrichtung in einer achten Position ist und
- Figur 11b: zeigt das zugehörige Ersatzschaltbild.
- Figur 12a: zeigt das Potentiometer nach Figur 4a, bei dem die Verbindungsvorrichtung in einer neunten Position ist und
- Figur 12b: zeigt das zugehörige Ersatzschaltbild.
- Figur 13a: zeigt das Potentiometer nach Figur 4a, bei dem die Verbindungsvorrichtung in einer zehnten Position ist und
- Figur 13b: zeigt das zugehörige Ersatzschaltbild.
- Figur 14a: zeigt das Potentiometer nach Figur 4a, bei dem die Verbindungsvorrichtung in einer elften Position ist und
- Figur 14b: zeigt das zugehörige Ersatzschaltbild.
- Figur 15a: zeigt das Potentiometer nach Figur 4a, bei dem die Verbindungsvorrichtung in einer zwölften Position ist,
- Figur 15b: zeigt das zugehörige Ersatzschaltbild. Die
- Figuren16a und 16 b: zeigen einen Querschnitt entlang der Linie A gemäß der Figuren 1a und 4a. Die
- Figuren 17a, 17b, 18a, 18b,:
- 19a, 19b, 20a, 20b,:
- 21 a, 21 b, 22a und 22b: zeigen eine dritte Ausführungsform eines erfindungsgemäßen Potentiometers und die jeweils zugehörigen Ersatzschaltbilder. Die
- Figuren 23a, 23b: sind Diagramme, die die Abhängigkeit von an Kontakten des Potentiometers gemäß den Figuren 4a bis 15b abfallenden Spannungen in Abhängigkeit vom Drehwinkel der Verbindungsvorrichtung darstellen.

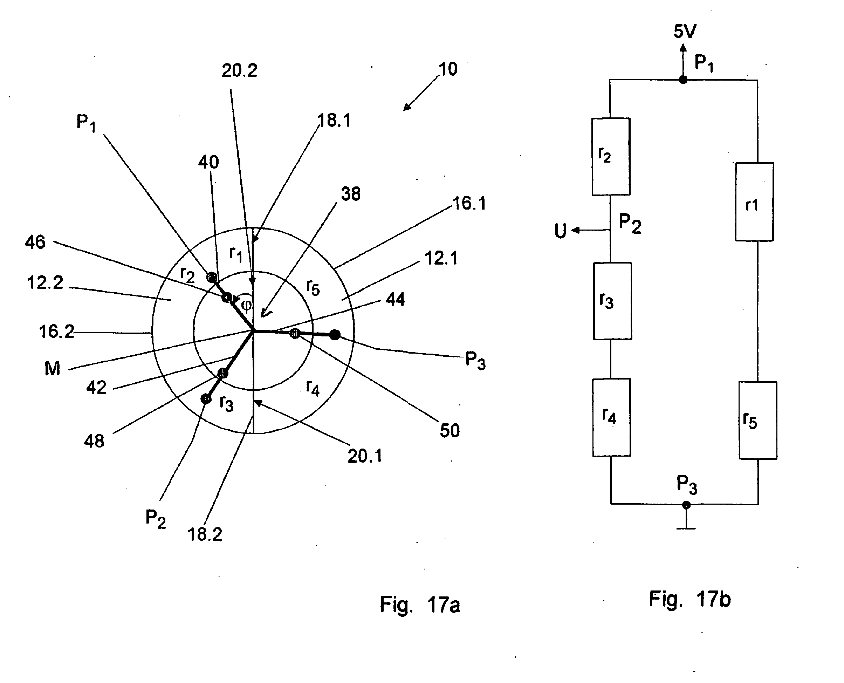

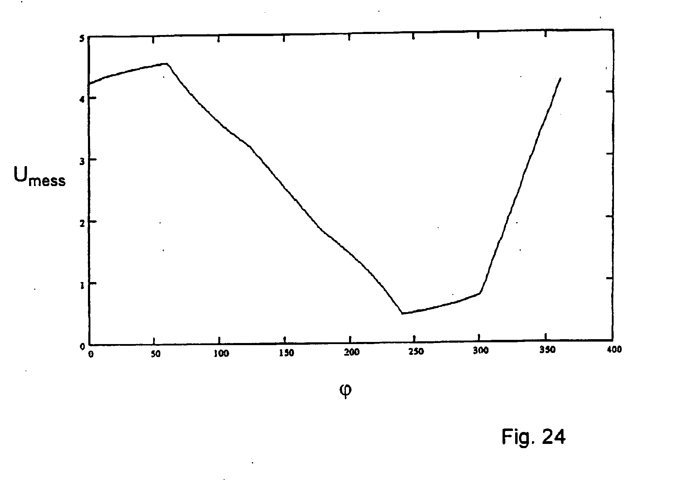

- Figur 24: ist ein sich aus Teilberechnungen resultierender Kurvenverlauf der Spannung über 360° des Drehwinkels für ein Potentiometer gemäß den Figuren 17a bis 22b.

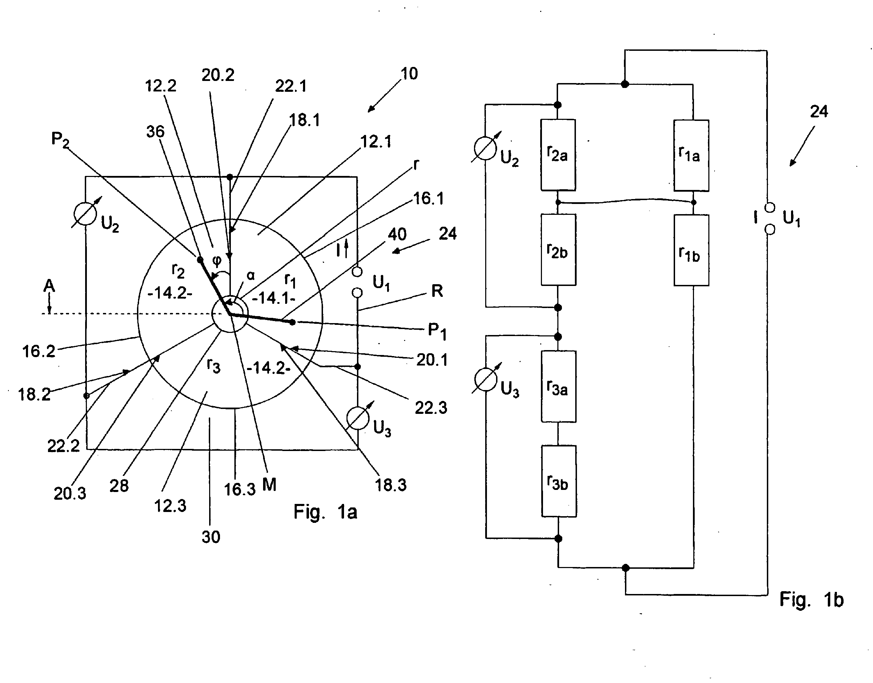

Figur 1a zeigt ein Potentiometer 10 mit drei Segmenten 12.1, 12.2, 12.3 die jeweils eine Kontaktseite 14.1, 14.2 und 14.3 aufweisen. Die Kontaktseite 14.1 ist von einer Kante 16.1 berandet, die einmal um das Segment 12.1 herumläuft. Auf diese gleiche Weise ist die Kontaktseite 14.2 von einer Kante 16.2 und die Kontaktseite 14.3 von einer Kante 16.3 umrandet. Gleichartige Objekte tragen jeweils gleiche Bezugzeichen mit ggf. unterschiedlichen, dem Durchnummerieren dienenden Suffixen.

Die Kante 16.1 besitzt einen ersten Abschnitt 18.1 und einen zweiten Abschnitt 20.1. Auf gleiche Weise besitzen die Kanten 16.2 bzw. 16.3 erste Abschnitte 18.1 bzw. 18.3 und zweite Abschnitte 20.2 bzw. 20.3. Die Segmente 12.1, 12.2 und 12.3 liegen in ihren ersten Abschnitten 18 und ihren zweiten Abschnitten 20 jeweils bündig aneinander an, so dass sie in elektrischem Kontakt miteinander stehen. Durch das Angrenzen bilden die Segmente 12.1 bis 12.3, die als Kreisringsegmente ausgebildet sind, einen geschlossenen Kreisring, bei dem jedes Segment mit genau zwei benachbarten Segmenten aufgrund ihres bündigen Kontakts elektrisch miteinander verbunden ist.

Die Segmente 12.1, 12.2 und 12.3 sind jeweils gleich groß und weisen einen homogenen, das heißt vom Ort unabhängigen, spezifischen elektrischen Widerstand auf. So besitzt das Segment 12.1 einen spezifischen elektrischen Widerstand r1, der sich von einem spezifischen elektrischen Widerstand r2 von Segment 12.2 und einem spezifischen elektrischen Widerstand r3 von Segment 12.3 unterscheidet.

Zwischen jeweils zwei Segmenten befindet sich ein elektrischer Kontakt. So befindet sich ein elektrischer Kontakt 22.1 zwischen den Segmenten 12.1 und 12.2. Ein elektrischer Kontakt 22.2 ist zwischen den Segmenten 12.2. und 12.3 und ein elektrischer Kontakt 22.3 ist zwischen den Segmenten 12.3 und 12.1 angeordnet. Über die elektrischen Kontakte 22.1 bis 22.3 kann eine Spannung ermittelt werden, die über das jeweilige Segment abfällt. In einer alternativen Ausführungsform können die Kontakte 22 auch an beliebigen anderen Stellen der Segmente angeordnet sein, beispielsweise in der jeweiligen Segmentmitte.

Über die elektrischen Kontakte 22.1 und 22.3 ist ein vorgegebener Strom I einprägbar, der von einer Stromquelle 24.1 abgegeben werden kann. Alternativ ist eine Spannungsquelle 24.2 vorhanden, die an die elektrischen Kontakte 22.1 und 22.3 eine vorgegebene Spannung U₁ von beispielsweise 5V anlegt.

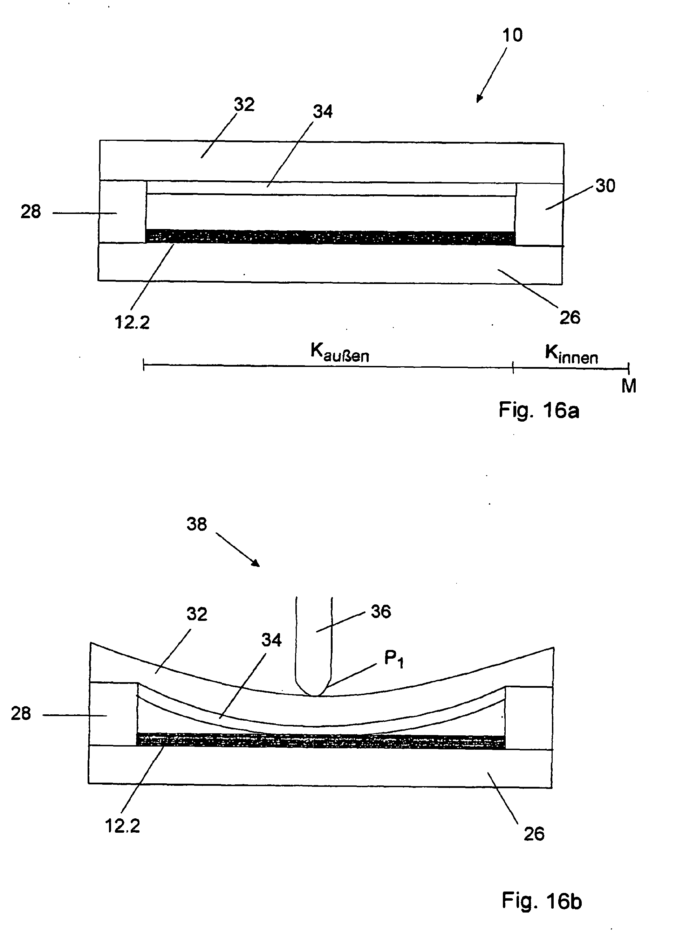

Die in Figur 1 gezeigten Segmente 12.1 bis 12.3 bilden eine Lage des Potentiometers 10. Figur 16a zeigt einen Schnitt entlang der Linie A. Wie zu sehen ist, umfasst das Potentiometer 10 einen Träger 26, auf den die Segmente 12.1 bis 12.3 aufgebracht sind, wobei in Figur 16a nur das Segment 12.2 gezeigt ist. Entlang eines äußeren Kreisringradius K_{außen} und eines inneren Kreisringradius Kᵢₙₙₑₙ sind ein innerer Abstandsring 28 und ein äußerer Abstandsring 30 angeordnet, die eine Deckmembran 32 auf Abstand von dem Träger 26 halten. An der Deckmembran 32 ist ein flexibler Leiter 34 in Form einer Silberschicht befestigt, der eine kreisringförmige Gestalt hat und von den Segmenten 12.1 bis 12.3 beabstandet ist.

Wie Figur 16b zeigt, führt ein Druck mit einer Koppeleinrichtung 36 auf die Deckmembran 32 dazu, dass sich der flexible Leiter 34 verformt und so in einem Kontaktpunkt in Kontakt mit dem jeweiligen Segment, hier mit Segment 12.2, kommt. Dadurch wird ein elektrischer Kontakt zwischen dem flexiblen Leiter 34 und dem Segment 12.2 hergestellt. Die Deckmembran 32, der flexible Leiter 34 und die Koppeleinrichtung 36 sind Teile einer Verbindungsvorrichtung 38. Alternativ kann die Verbindungsvorrichtung auch bekannte Schleifkontakte umfassen, die drehbar gelagert sind.

Figur 1a zeigt die Koppeleinrichtung 36, die in einem Mittelpunkt M um einen Drehwinkel ϕ drehbar belagert ist. An ihren Enden drückt die Koppeleinrichtung 36 in zwei Kontaktpunkten P₁, P₂ auf die Deckmembran 32 (Figur 16b) und schließt so die entsprechenden Segmente, in Figur 1a die Segmente 12.1 und 12.2, in den Kontaktpunkten P₁ und P₂ kurz. Dadurch verändert sich, wie weiter unten näher erläutert wird, die Spannung, die zwischen zwei Segmenten abfällt.

Die beiden Kontaktpunkte P₁ und P₂ liegen bezüglich des Mittelpunkts M um einen Spreizwinkel α voneinander beabstandet (Figur 1a), der größer ist als der von einem Segment überspannte Winkelbereich, im vorliegenden Fall 120°.

Figur 1b zeigt das zu dem Drehwinkel ϕ gehörende Ersatzschaltbild für das Potentiometer 10. Der elektrische Widerstand eines jeden Segments 12.1 bis 12.3 ist dabei in zwei Teilwiderstände unterteilt, die den elektrischen Widerstand im Uhrzeigersinn vor dem Kontaktpunkt P₁, P₂ bzw. danach darstellen. Die Summe der Teilwiderstände, die mit dem Suffix "a" bzw. "b" bezeichnet sind, entspricht jeweils dem Gesamtwiderstand r des Segments. Die Größe jedes der Teilwiderstände hängt von dem Drehwinkel ϕ ab, sofern einer der beiden Kontaktpunkte P₁ bzw. P₂ sich in dem betreffenden Segment befindet.

Aus dem in Figur 1b dargestellten Ersatzschaltbild lassen sich durch Anwendung der Kirchhoff'schen Regeln die Spannungen U₁, U₂ und U₃ ermitteln, die bei einem vorgegebenen Strom I oder bei einer vorgegebenen Spannung über die Segmente 12.1, 12.2 und 12.3 abfallen, und die mit den elektrischen Kontakten 22.1, 22.2 und 22.3 gemessen werden können. Wird eine vorgegebene Spannung U₁ angelegt, so können die Spannungen U₂ und U₃ entsprechend berechnet werden.

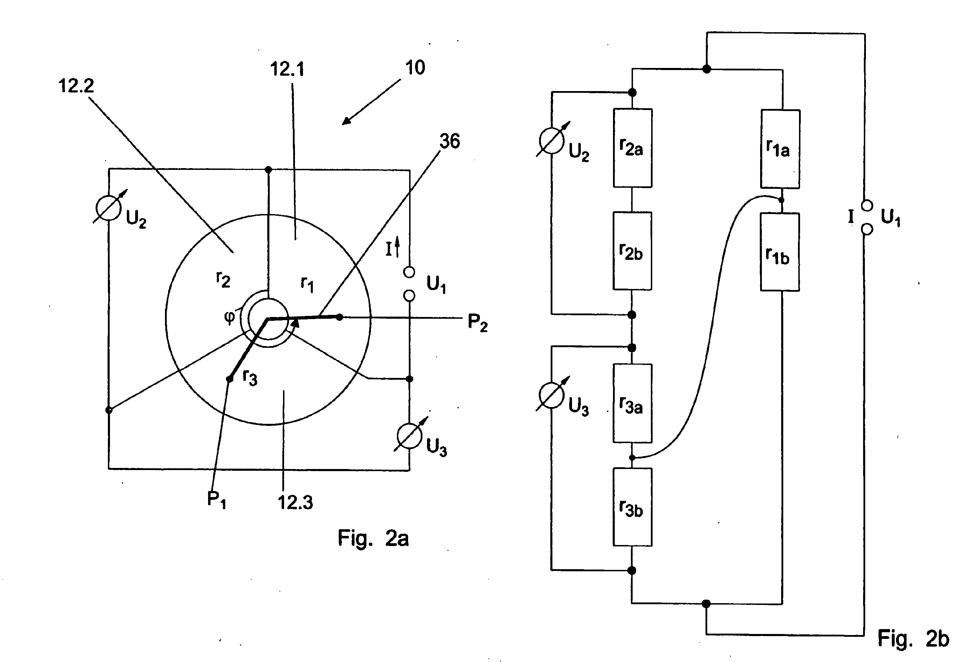

Figur 2a zeigt das Potentiometer 10, bei dem die Koppeleinrichtung 36 unter einem anderen Drehwinkel ϕ steht, so dass der Kontaktpunkt P₁ im Segment 12.3 liegt und der Kontaktpunkt P₂ im Segment 12.1 liegt. Es ergibt sich das in Figur 2b gezeigte Ersatzschaltbild.

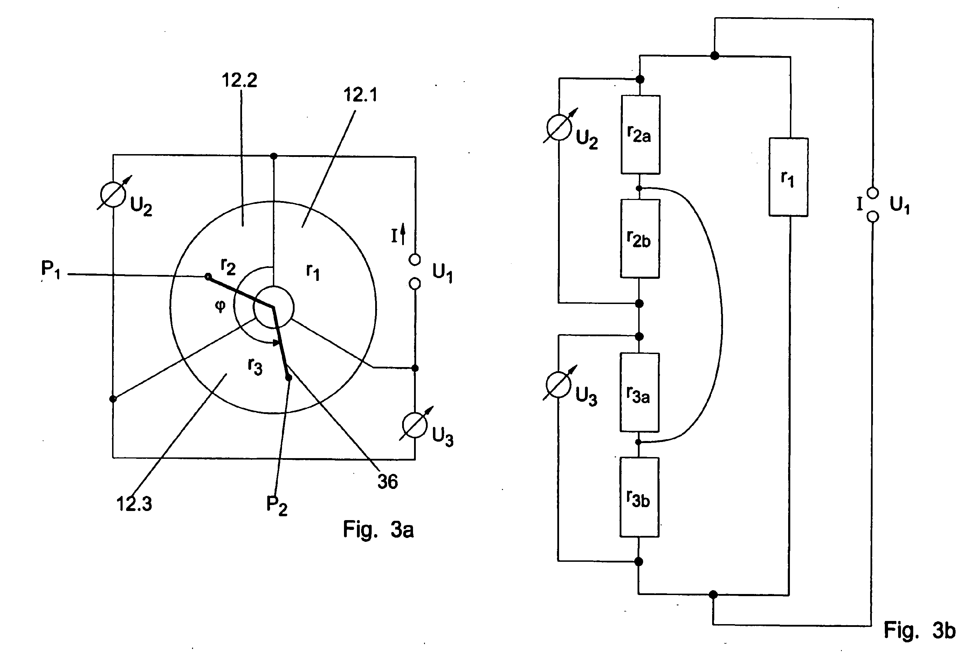

Figur 3a zeigt eine dritte mögliche Stellung der Koppeleinrichtung 36, bei der der erste Kontaktpunkt P₁ sich im Segment 12.2 und der zweite Kontaktpunkt P₂ sich im Segment 12.3 befindet. Es ergibt sich das in Figur 3b gezeigte Ersatzschaltbild.

Anhand der in den Figuren 1b, 2b und 3b gezeigten Ersatzschaltbilder lässt sich bei vorgegebenem Strom I oder vorgegebener Spannung U für jeden gezeigten Drehwinkel ϕ ein Paar aus erster Spannung U₁ und zweiter Spannung U₂ ermitteln, das dem Drehwinkel ϕ eineindeutig entspricht. Durch Ermitteln von zwei der drei Spannungen U₁ bis U₃ lässt sich damit eindeutig auf den Drehwinkel ϕ schließen.

Figur 4a zeigt eine zweite Ausführungsform eines erfindungsgemäßen Potentiometers 10 mit sechs Segmenten 12.1, 12.2, 12.3, 12.4, 12.5 und 12.6. Die Segmente 12.1 bis 12.6 sind so angeordnet wie es oben für die erste Ausführungsform beschrieben ist. Zwischen den einzelnen Segmenten sind elektrische Kontakte 22.1 bis 22.6 angeordnet. Die Kontakte 22.1 und 22.4 sind mit einer nicht eingezeichneten Spannungsquelle verbunden, die über die beiden elektrischen Kontakte eine elektrische Spannung V von beispielsweise 5V anlegt, welche einen Strom I zur Folge hat, der durch alle Segmente 12.1 bis 12.6 fließt. Figur 4b zeigt das Ersatzschaltbild für das Potentiometer 10, wenn sich die Koppeleinrichtung 36 in der in Figur 4 gezeigten Stellung befindet. Die Widerstände sind wiederum mit rᵢ, mit i=1,2,3,4,5,6 angegeben.

Die Figuren 5a, 5b, 6a, 6b, 7a, 7b, 8a, 8b, 9a, 9b, 10a, 10b, 11a, 11b, 12a, 12b, 13a, 13b, 14a, 14b und 15a bzw. 15b zeigen jeweils die weiteren möglichen Stellungen der Koppeleinrichtung 36 und die zugehörigen Ersatzschaltbilder. Im Zusammenhang mit der Beschreibung der Figuren 23a, 23b wird weiter unten hergeleitet, welche Spannungen zwischen einzelnen elektrischen Kontakten 22.1 bis 22.6 für unterschiedliche Drehwinkel ϕ messbar sind.

Figur 17a zeigt eine alternative Ausführungsform eines erfindungsgemäßen Potentiometers 10, das zwei Segmente 12.1 und 12.2 aufweist, die Kanten 16.1 und 16.2 besitzen. Die Kanten 16.1 und 16.2 grenzen mit ihren jeweiligen ersten Abschnitten 18.1 bzw. 18.2 einerseits und ihren zweiten Abschnitten 20.1 und 20.2 andererseits bündig so aneinander an, dass sie elektrisch miteinander in Kontakt stehen.

Die beiden Segmente 12.1, 12.2 bilden eine kreisringförmige Anordnung, in deren Mittelpunkt M eine Verbindungsvorrichtung 38 drehbar um den Mittelpunkt M gelagert ist. Die Verbindungsvorrichtung 38 weist einen ersten Arm 40, einen zweiten Arm 42 und einen dritten Arm 44 auf, die an ihrem dem Mittelpunkt M abgewandten Ende in einem ersten Kontaktpunkt P₁, in einem zweiten P₂ bzw. in einem dritten Kontaktpunkt P₃ in elektrischem Kontakt mit dem jeweiligen Segment stehen. Auf diese Weise werden Schleifkontakte gebildet.

Über einen ersten Bestromungskontakt 46 und einen zweiten Bestromungskontakt 48 wird durch eine nicht eingezeichnete Stromquelle ein elektrischer Strom I aufgeprägt, der von der Stromquelle kommend über den ersten Arm 40 durch den Kontaktpunkt P₁, durch das Segment 12.1 oder durch die Segmente 12.1 und 12.2, durch den Kontaktpunkt P₂ und den zweiten Arm 42 zur Stromquelle zurückfließt. Der erste Arm 40 ist gegen den zweiten Arm 42 elektrisch isoliert, so dass ein Stromfluss vom ersten Bestromungskontakt zum zweiten Bestromungskontakt durch die beiden Arme 40, 42 allein nicht möglich ist. Alternativ kann anstelle des elektrischen Stroms I auch eine elektrische Spannung U an die beiden Bestromungskontakte 46, 48 angelegt werden.

Aufgrund des oben beschriebenen elektrischen Stroms bildet sich zwischen den Kontaktpunkten P₃ und P₁ und den Kontaktpunkten P₃ und P₂ eine elektrische Spannung aus, die von einer nicht eingezeichneten Spannungsmessvorrichtung gemessen werden kann. Dazu wird die Spannung zwischen dem Messkontakt 50 und dem ersten Bestromungskontakt bzw. dem zweiten Bestromungskontakt 48 gemessen.

Figur 17b zeigt das Ersatzschaltbild des in Figur 17a gezeigten Potentiometers bei der dort gezeigten Drehwinkelstellung ϕ. Die Notation der Widerstände entspricht der Notation für die beiden oben beschriebenen Ausführungsbeispiele.

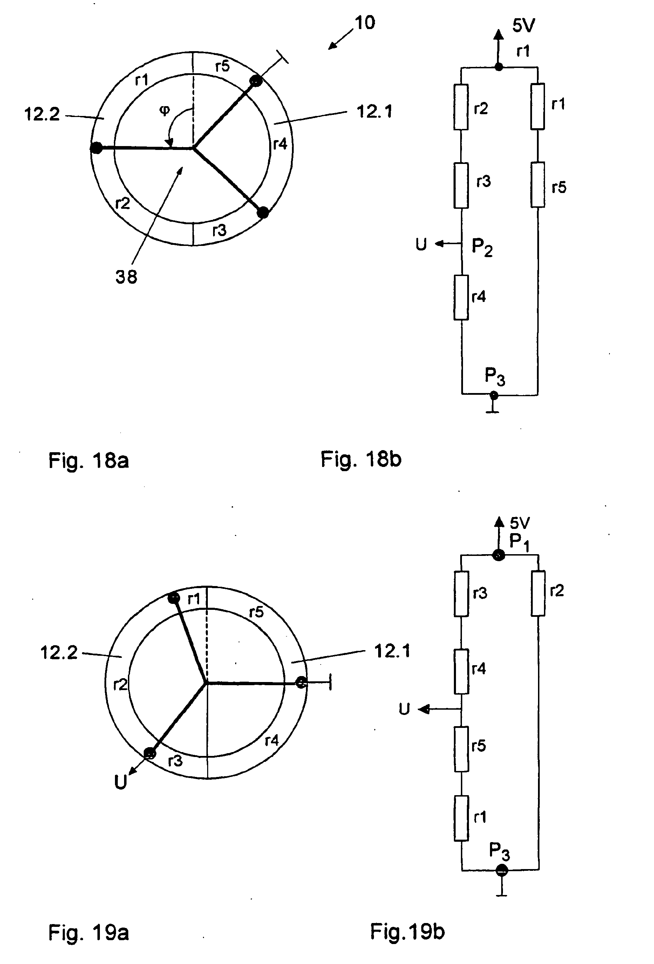

Figur 18a zeigt das Potentiometer in einer anderen Winkelstellung und Figur 18b zeigt das zugehörige Ersatzschaltbild.

Die Figuren 19a, 19b, 20a, 20b, 21 a, 21 b sowie 22a und 22b zeigen weitere mögliche Stellungen der Übertragungsvorrichtung 38 und die jeweils zugehörigen Ersatzschaltbilder.

### Berechnung der gemessenen Spannungen in Abhängigkeit vom Drehwinkel für die zweite Ausführungsform

Aus den in den Figuren 17b, 18b, 19b, 20b, 21b und 22b gezeigten Ersatzschaltbildern können bei einem vorgegebenen Strom I die zwischen dem ersten Kontaktpunkt P₁ und dem dritten Kontaktpunkt P₃ bzw. dem zweiten Kontaktpunkt P₂ und dem dritten Kontaktpunkt P₃ gemessenen Spannungen wie folgt berechnet werden.

Für die Berechnungen wird ein Spreizwinkel a zwischen den beiden Betätigungselementen von 90° angenommen. Für den Widerstandsbelag wird ein Wert von 10Ω pro Grad (°) angenommen. Jedes Segment 12.1 bis 12.6 überstreicht 60°, so dass der Widerstand eines Segments 600Ω beträgt.

Wird laut Figur 4a zwischen den Anschlüssen 22.1 (U = +5 V) und 22.4 (Masse) eine Spannung angelegt, und der Winkel ϕ zwischen 0° und 30° geändert so ergibt sich eine Ersatzschaltung laut Figur 4b.

Die Teilwiderstände in der Figur 4b errechnen sich wie folgt:

| | |
|---|---|
| r1 = | ϕ *10 Ω |
| r2 = | (60 - ϕ) * 10 Ω |
| r3 = | 600 Ω |
| r4 = | 600 Ω |
| r5 = | 600 Ω |
| r6 = | (30 + ϕ) * 10 Ω |
| r7 = | (30- ϕ) * 10 Ω |
| r8 = | 600 Ω |

Mittels Hilfe der Kirchhoff'schen Gesetze ergibt sich der in Figur 23a im Intervall 0° ≤ ϕ ≤ 30° gezeigte Spannungsverlauf für die Spannungen U1 zwischen dem Kontakt 22.2 und Masse, U2 zwischen dem Kontakt 22.3 und Masse, U3 zwischen dem Kontakt 22.5 und Masse sowie U4 zwischen dem Kontakt 22.6 und Masse.

Wird laut zwischen den Anschlüssen 22.1 (+ 5V) und 22.4 (Masse) eine Spannung U angelegt und der Winkel ϕ entsprechend Figur 5a zwischen 30° und 60° geändert, so ergibt sich eine Ersatzschaltung laut Figur 5b. Die Teilwiderstände in der Figur 5b errechnen sich wie folgt:

| | |
|---|---|
| r1 = | ϕ *10 Ω |
| r2 = | (60 - ϕ) * 10 Ω |
| r3 = | 600 Ω |
| r4 = | 600 Ω |
| r5 = | 600 Ω* |
| r6 = | 600 Ω |
| r7 = | (ϕ-30) * 10 Ω |
| r8 = | (90-ϕ) * 10 Ω |

Mittels Hilfe der Kirchhoff'schen Gesetze ergibt sich der in der Figur 23a im Intervall 30° ≤ ϕ ≤ 60° gezeigte Spannungsverlauf.

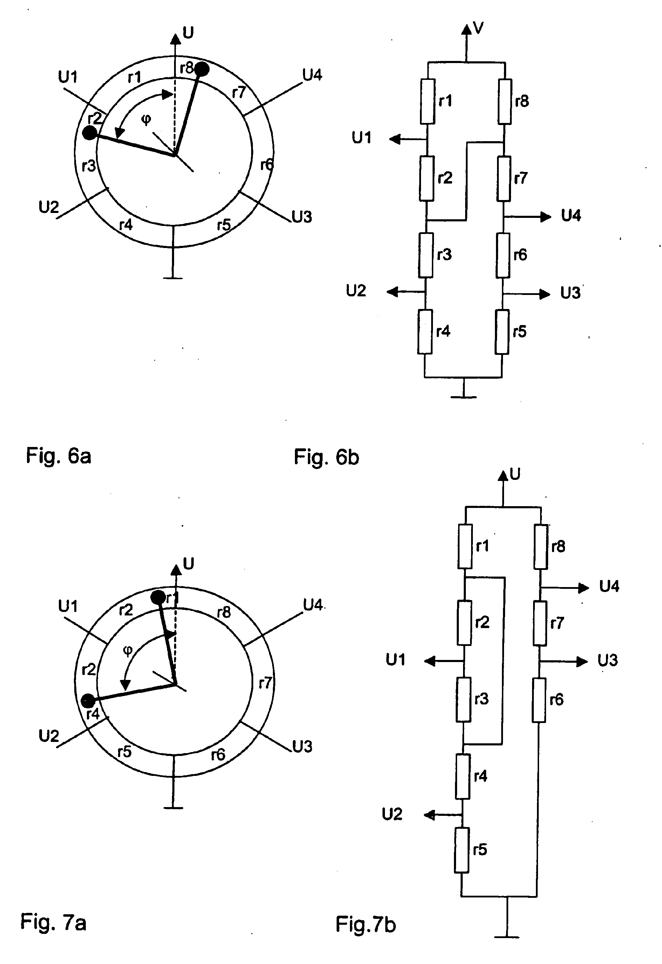

Wird der Winkel ϕ entsprechend Figur 6a zwischen 60° und 90° geändert, so ergibt sich eine Ersatzschaltung laut Figur 6b. Die Teilwiderstände in der Figur 6b errechnen sich wie folgt:

| | |
|---|---|
| r1 = | 600 Ω |
| r2 = | (ϕ - 60) * 10 Ω |
| r3 = | (120 - ϕ) * 10 Ω |
| r4 = | 600 Ω |
| r5 = | 600 Ω |
| r6 = | 600 Ω |
| r7 = | (ϕ-30) * 10 Ω |
| r8 = | (90- ϕ) * 10 Ω |

Mittels Hilfe der Kirchoff'schen Gesetze ergibt sich der in Figur 23a im Intervall 60° ≤ ϕ ≤ 90° gezeigte Spannungsverlauf.

Wird der Winkel ϕ entsprechend Figur 7a zwischen 90° und 120° geändert, so ergibt sich eine Ersatzschaltung laut Figur 7b. Die Teilwiderstände in der Figur 7b errechnen sich wie folgt:

| | |
|---|---|
| r1 = | (ϕ-90) * 10 Ω |
| r2 = | (150-ϕ) * 10 Ω |
| r3 = | (ϕ - 60) * 10 Ω |
| r4 = | 600 Ω |
| r5 = | 600 Ω |
| r6 = | 600 Ω |
| r7 = | (ϕ-30) * 10 Ω |
| r8 = | (90- ϕ) * 10 Ω |

Mittels Hilfe der Kirchoff'schen Gesetze ergibt sich der in Figur 23a im Intervall 90° ≤ ϕ ≤ 120° gezeigte Spannungsverlauf.

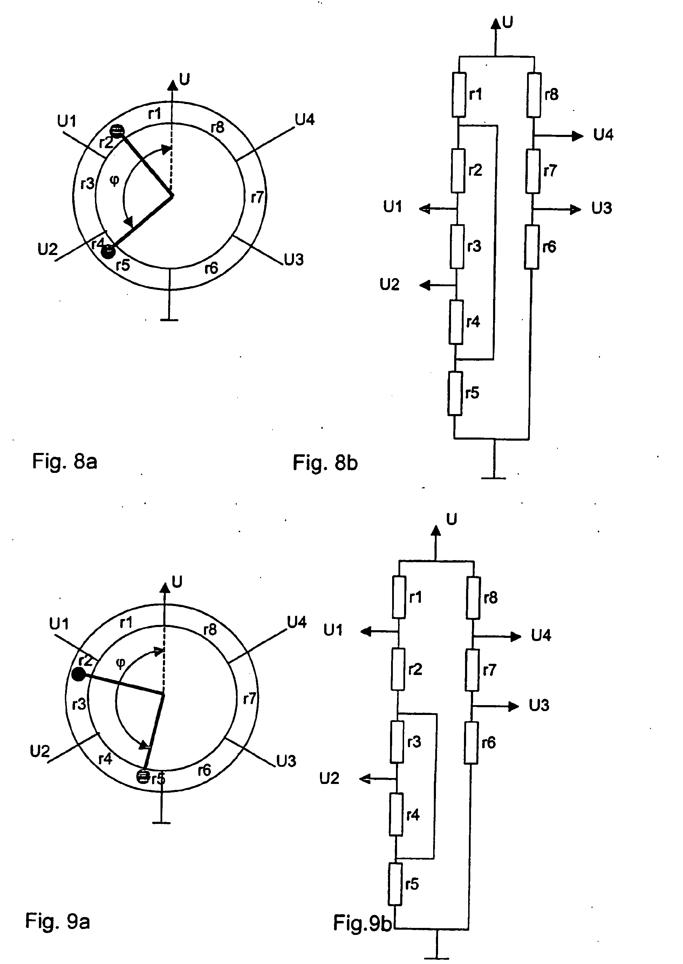

Wird der Winkel ϕ entsprechend Figur 8a zwischen 120° und 150° geändert, so ergibt sich eine Ersatzschaltung laut Figur 8b. Die Teilwiderstände in der Figur 8b errechnen sich wie folgt:

| | |
|---|---|
| r1 = | (ϕ - 90) * 10 Ω |
| r2 = | (150 - ϕ) * 10 Ω |
| r3 = | (β -120) * 10 Ω |
| r4 = | (180-ϕ) * 10 Ω |
| r5 = | 600 Ω |
| r6 = | 600 Ω |
| r7 = | 600 Ω |
| r8 = | 600 Ω |

Mittels Hilfe der Kirchhoff'schen Gesetze ergibt sich der in Figur 23a im Intervall 120° ≤ ϕ ≤ 150° gezeigte Spannungsverlauf.

Wird der Winkel ϕ entsprechend Figur 9a zwischen 120° und 180° geändert, so ergibt sich eine Ersatzschaltung laut Figur 9b. Die Teilwiderstände in der Figur 9b errechnen sich wie folgt:

| | |
|---|---|
| r1 = | 600 Ω |
| r2 = | (ϕ -150) * 10 Ω |
| r3 = | (210 - ϕ) * 10 Ω |
| r4 = | (ϕ -120) * 10 Ω |
| r5 = | (180 - ϕ) * 10 Ω |
| r6 = | 600 Ω |
| r7 = | 600 Ω |
| r8 = | 600 Ω |

Mittels Hilfe der Kirchhoff'schen Gesetze ergibt sich der in Figur 23a im Intervall 150° ≤ ϕ ≤ 180° gezeigte Spannungsverlauf.

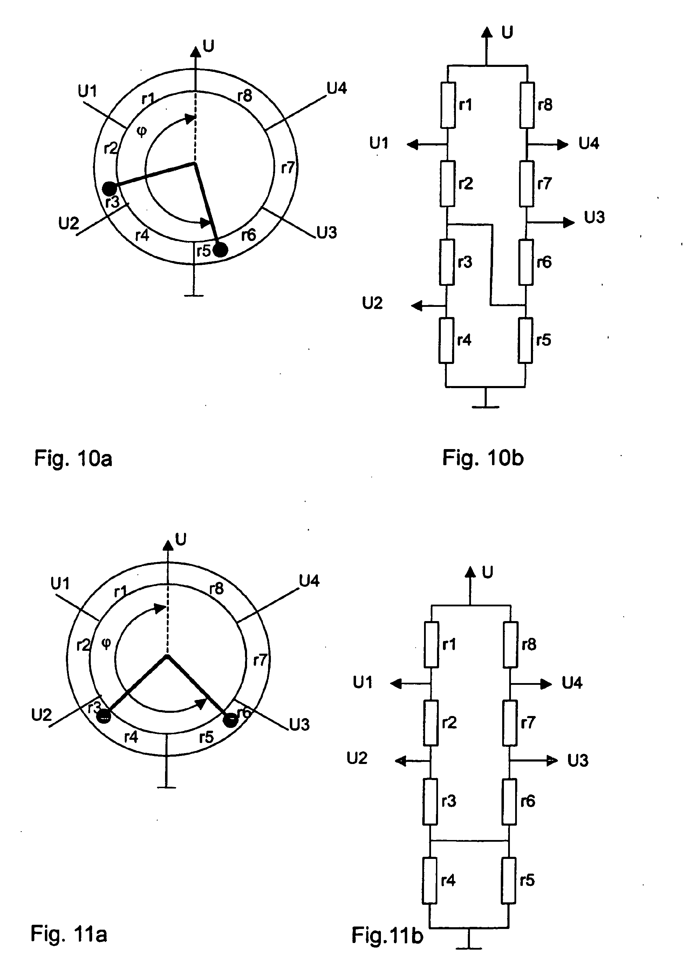

Wird der Winkel ϕ entsprechend Figur 10a zwischen 180° und 210° geändert, so ergibt sich eine Ersatzschaltung laut Figur 10b. Die Teilwiderstände in der Figur 10b errechnen sich wie folgt:

| | |
|---|---|
| r1 = | 600 Ω |
| r2 = | (ϕ-150) * 10 Ω |
| r3 = | (210-ϕ) * 10 Ω |
| r4 = | 600 Ω |
| r5 = | (ϕ -180) * 10 Ω |
| r6 = | (240 - Ω) * 10 Ω) |
| r7 = | 600 Ω |
| r8 = | 600 Ω |

Mittels Hilfe der Kirchhoff'schen Gesetze ergibt sich der in Figur 23a im Intervall 180° ≤ ϕ ≤ 210° gezeigte Spannungsverlauf.

Wird der Winkel ϕ entsprechend Figur 11a zwischen 210° und 240° geändert, so ergibt sich eine Ersatzschaltung laut Figur 11 b. Die Teilwiderstände in der Figur 11 b errechnen sich wie folgt:

| | |
|---|---|
| r1 = | 600 Ω |
| r2 = | 600 Ω |
| r3 = | (ϕ-210)*10 Ω |
| r4 = | (270-ϕ)*10 Ω |
| r5 = | (ϕ-80)*10 Ω |
| r6 = | (240-ϕ)*10 Ω |
| r7 = | 600 Ω |
| r8 = | 600 Ω |

Mittels Hilfe der Kirchhoff'schen Gesetze ergibt sich der in Figur 23a im Intervall 210° ≤ ϕ ≤ 240° gezeigte Spannungsverlauf.

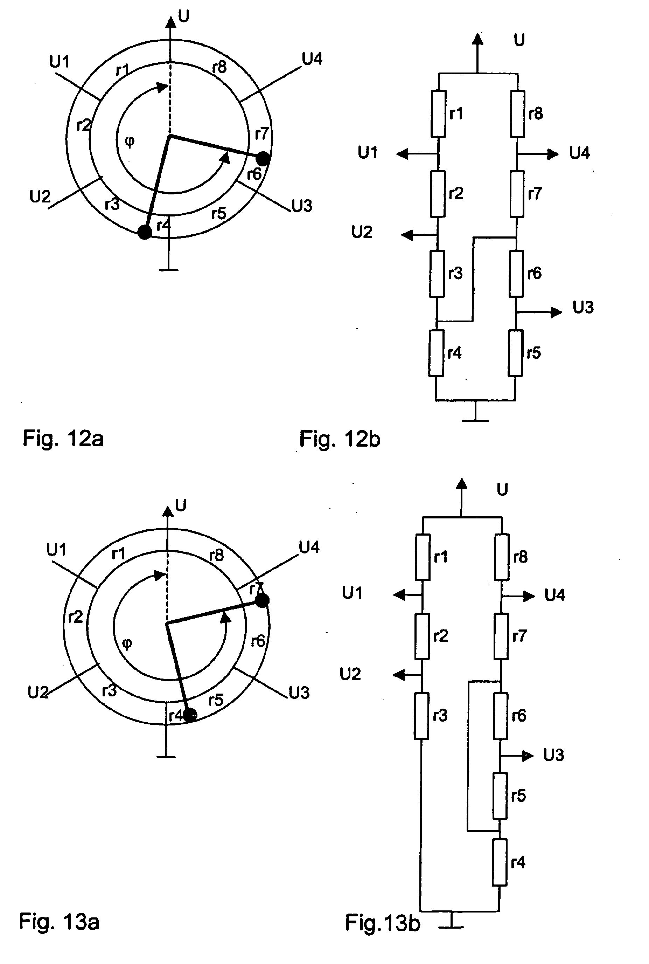

Wird laut Figur 4a zwischen den Anschlüssen 22.1 (+ 5V) und 22.4 (Masse) eine Spannung angelegt und der Winkel ϕ entsprechend Figur 12a zwischen 240 und 270° geändert, so ergibt sich eine Ersatzschaltung laut Figur 12b. Die Teilwiderstände in der Figur 12b errechnen sich wie folgt:

| | |
|---|---|
| r1 = | 600 Ω |
| r2 = | 600 Ω |
| r3 = | (ϕ-210)*10 Ω |
| r4 = | (270-ϕ)*10 Ω |
| r5 = | 600 Ω |
| r6 = | (ϕ-240)*10 Ω |
| r7 = | (300-ϕ)*10 Ω |
| r8 = | 600 Ω |

Mittels Hilfe der Kirchhoff'schen Gesetze ergibt sich der in Figur 23a im Intervall 240° ≤ ϕ ≤ 270° gezeigte Spannungsverlauf.

Wird laut Figur 4a zwischen den Anschlüssen 22.1 (+ 5V) und 22.4 (Masse) eine Spannung angelegt und der Winkel ϕ entsprechend Figur 13a zwischen 270 und 300° geändert, so ergibt sich eine Ersatzschaltung laut Figur 13b.

Die Teilwiderstände in der Figur 13b errechnen sich wie folgt:

| | |
|---|---|
| r1 = | 600 Ω |
| r2 = | 600 Ω |
| r3 = | 600 Ω |
| r4 = | (ϕ - 270)*10 Ω |
| r5 = | (350 - ϕ)*10 Ω |
| r6 = | (ϕ - 240)*10 Ω |
| r7 = | (300 - ϕ)*10 Ω |
| r8 = | 600 Ω |

Mittels Hilfe der Kirchhoff'sehen Gesetze ergibt sich der in Figur 23a im Intervall 270° ≤ ϕ ≤ 300° gezeigte Spannungsverlauf.

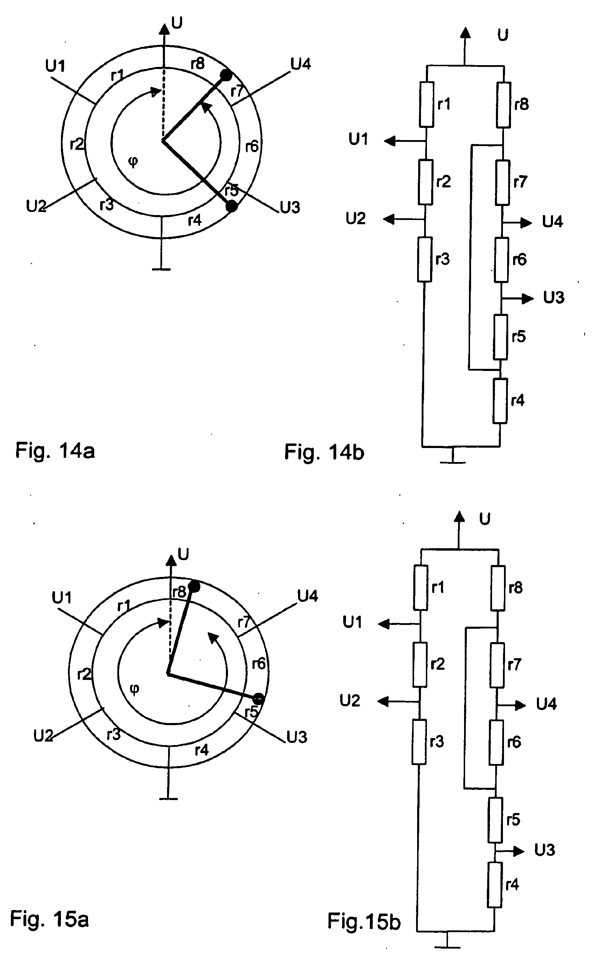

Wird der Winkel ϕ entsprechend Figur 14a zwischen 300 und 330° geändert, so ergibt sich eine Ersatzschaltung laut Figur 14b. Die Teilwiderstände in der Figur 14b errechnen sich wie folgt:

| | |
|---|---|
| r1 = | 600 Ω |
| r2 = | 600 Ω |
| r3 = | 600 Ω |
| r4 = | (ϕ - 180)*10 Ω |
| r5 = | (270 - ϕ)*10 Ω |
| r6 = | 600 Ω |
| r7 = | (ϕ - 330)*10 Ω |
| r8 = | (360 - ϕ)*10 Ω |

Mittels Hilfe der Kirchhoff'schen Gesetze ergibt sich der in Figur 23a im Intervall 300° ≤ ϕ ≤ 330° gezeigte Spannungsverlauf.

Wird der Winkel ϕ entsprechend Figur 15a zwischen 330 und 360° geändert, so ergibt sich eine Ersatzschaltung laut Figur 15b. Die Teilwiderstände in der Figur 8b errechnen sich wie folgt:

| | |
|---|---|
| r1 = | 600 Ω |
| r2 = | 600 Ω |
| r3 = | 600 Ω |
| r4 = | 600 Ω |
| r5 = | (ϕ-330)*10 Ω |
| r6 = | (390-ϕ)*10 Ω |
| r7 = | (ϕ-300)*10 Ω |
| r8 = | (360-ϕ)*10 Ω |

Mittels Hilfe der Kirchhoff'schen Gesetze ergibt sich der in Figur 23a im Intervall 330° ≤ ϕ ≤ 360° gezeigte Spannungsverlauf.

Über 0° ≤ ϕ ≤ 360° ergibt sich so insgesamt der in Figur 23a gezeigte Kurvenverlauf. Für größere Drehwinkel als 360° ist der Drehwinkel stets modulo 360° zu betrachten.

Wird zwischen an den Kontakt 22.2 (Figur 4a) eine Spannung von U=+ 5V angelegt und der Kontakt 22.5 auf Masse geschaltet und werden die Spannungen U1 an 22.3, U2 an 22.4, U3 an 22.6 und U4 an 22.1 gemessen, ergibt sich ein um im Drehwinkel ϕ um -60° verschobener Kurvenverlauf, der in Figur 23b gezeigt ist.

Zum Ermitteln des Drehwinkels ϕ aus den gemessenen Spannungen

Zunächst wird eine Spannung U = 5V zwischen den Kontakten 22.1 und 22.4 angelegt. Es versteht sich, dass keiner der Kontakte geerdet sein muss; es werden dann die oben beschriebenen Spannungen zum Potential des Kontakts 22.4 gemessen. Es wird sodann überprüft, ob die Bedingungen U4 = 3,33 ± 0,2 V und U3 = 1,66 ± 0,2 V erfüllt sind. Wenn ja, wird wie weiter unten beschrieben ist, aus den Spannungen U4 und U3 der Drehwinkel bestimmt. Wenn nein, wird die Spannung U über die entgegen dem Uhrzeigersinn nächsten Kontakte 22.2 und 22.5 angelegt.

In Figur 4a ist ein Weiterschaltwinkel β gezeigt, der bezüglich des Mittelpunkts M den Winkel zwischen dem Kontakt 22.1 und dem Kontakt angibt, an dem die Spannung U angelegt wird. Wenn die Bedingungen U4 = 3,33 ± 0,2 V und U3 = 1,66 ± 0,2 V erfüllt sind, wenn die Spannung U über die Kontakte 22.1 und 22.4 abfällt, so ist β = 0°. Sind die Bedingungen erfüllt, wenn die Spannung U über 22.2 und 22.5 abfällt, so ist β = 60°, und so fort.

Es werden also lange die Kontakte, über die die Spannung U angelegt wird, um jeweils 1 Segment (β = 60°) weitergeschaltet, bis die Bedingungen U4 = 3,33 ± 0,2 V und U3 = 1,66 ± 0,2 V erfüllt sind.

Der Drehwinkel ϕ kann aus den gemessenen Spannungen wie folgt berechnet werden.
Wenn U1 > ½ U = 2,5 V ist, gilt: ϕ = (β + (900 - 2,5 * U1)/5) mod 360,
Wenn U1 ≤ ½ U = 2,5 V ist, gilt: ϕ = (β + (900 - 2,5 * U2)/5) mod 360

Dabei bezeichnet mod 360 die Modularfunktion, für die (a+ z 360°) mod 360 = a für alle a zwischen 0° und 360° und alle ganzen Zahlen z gilt.

### Berechnung der gemessenen Spannungen in Abhängigkeit vom Drehwinkel für die dritte Ausführungsform

Für die in Figur 17a gezeigte Ausführungsform wird ein erfindungsgemäßes Verfahren dadurch durchgeführt, dass ein Strom I durch den ersten und den zweiten Bestromungskontakt 46 bzw. 48 geschickt wird. Dazu wird entweder eine Spannung U oder ein Strom I angelegt.

Für die folgenden Berechnungen wird ein Spreizwinkel α zwischen den drei Armen 40, 42, 44 von α = 120° angenommen. Für den Widerstandsbelag wird ein Wert von 10 Ω pro Grad für das Segment 12.2 und 100 Q pro Grad für das Segment 12.1 angenommen.

Wird über den ersten Bestromungskontakt 46 des ersten Arms 40 und den Messkontakt 50 des Arms 44 (Figur 17a) zwischen den Kontaktpunkten P1 (+ 5V) und P3 (Masse) eine Spannung U = 5V angelegt und der Winkel ϕ zwischen 0° und 60° geändert, so ergibt sich eine Ersatzschaltung laut Figur 17b. Die Teilwiderstände ri in der Figur 17b errechnen sich wie folgt:

| | |
|---|---|
| r1 = | kein Einfluss |
| r2 = | 1200 Ω |
| r3 = | (60 -ϕ) * 10 Ω |
| r4 = | (60+cp) * 100 Ω |
| r5 = | kein Einfluss |

Wird, wie in Figur 18a gezeigt, der Winkel ϕ zwischen 60° und 120° geändert, so ergibt sich eine Ersatzschaltung laut Figur 18b. Die Teilwiderstände in der Figur 18b errechnen sich wie folgt:

| | |
|---|---|
| r1 = | keinen Einfluss |
| r2 = | (180-cp)*10 Ω |
| r3 = | (ϕ-60)*100 Ω |
| r4 = | 1200 |
| r5 = | keinen Einfluss |

Wird, wie in Figur 19a gezeigt, der Winkel α zwischen 120° und 180° geändert, so ergibt sich eine Ersatzschaltung laut Figur 19b. Die Teilwiderstände in der Figur 19b errechnen sich wie folgt:

| | |
|---|---|
| r1 = | (ϕ-120)*10 Ω |
| r2 = | keinen Einfluss |
| r3 = | (180-ϕ)*10 Ω |
| r4 = | (ϕ-60)*100 Ω |
| r5 = | (240 - ϕ)* 100 |

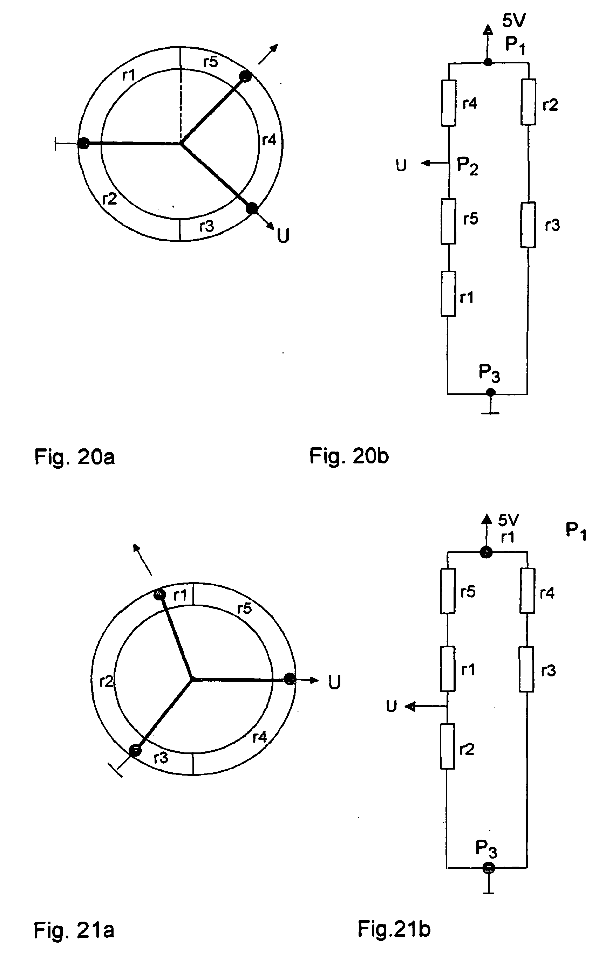

Wird, wie in Figur 20a gezeigt, der Winkel ϕ zwischen 180° und 240° geändert, so ergibt sich eine Ersatzschaltung laut Figur 20b. Die Teilwiderstände in der Figur 20b errechnen sich wie folgt:

| | |
|---|---|
| r1 = | (ϕ-120)*10 Ω |
| r2 = | keinen Einfluss |
| r3 = | keinen Einfluss |
| r4 = | 12000 Ω |
| r5 = | (240-ϕ) *100 Ω |

Wird, wie in Figur 21a gezeigt, der Winkel ϕ zwischen 240 und 300° geändert, so ergibt sich eine Ersatzschaltung laut Figur 21 b. Die Teilwiderstände in der Figur 21 b errechnen sich wie folgt:

| | |
|---|---|
| r1 = | (ϕ-240)*10 Ω |
| r2 = | 1200 |
| r3 = | keinen Einfluss |
| r4 = | keinen Einfluss |
| r5 = | (360 - ϕ) * 100 Ω |

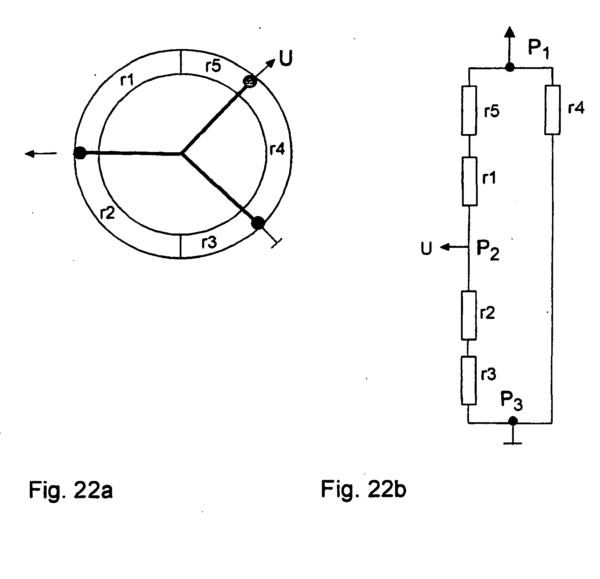

Wird, wie in Figur 22a gezeigt, der Winkel ϕ zwischen 300 und 360° geändert, so ergibt sich eine Ersatzschaltung laut Figur 22b. Die Teilwiderstände in der Figur 22b errechnen sich wie folgt:

| | |
|---|---|
| r1 = | (ϕ-240)*10 Ω |
| r2 = | (420-ϕ)*10 Ω |
| r3 = | keinen Einfluss |
| r4 = | keinen Einfluss |
| r5 = | (360-ϕ)*100 |

Aus den obigen Teilberechnungen ergibt sich für eine Spannung U = 5V der in Figur 24 gezeigte Kurvenverlauf einer Spannung Uₘₑₛₛ, die zwischen dem Kontaktpunkt P₂ und dem Kontaktpunkt P₃ anliegt, über dem Drehwinkel ϕ.

Wird zwischen den Anschlüssen P₂ (+ 5V) und P₁ (Masse) eine Spannung U angelegt und die Spannung U_{mess,2} an P₃ gemessen, ergibt sich ein um den Weiterschaltwinkel β = -120° verschobener Kurvenverlauf.

Wird zwischen den Anschlüssen P₃ (+ 5V) und P₂ (Masse) eine Spannung angelegt und die Spannung U_{mess,3} an P₁ gemessen, ergibt sich ein um den Weiterschaltwinkel β = +120° verschobener Kurvenverlauf.

Für die Messung des Winkels wird eine Spannung U zunächst zwischen den Kontaktpunkten P₁ und P₃ angelegt, anschließend zwischen den Kontaktpunkten P₂ und P₁ und danach zwischen P₃ und P₁. Es werden jeweils die oben beschriebenen Spannungen U_{mess,} U_{mess,2} und U_{mess,3} gemessen. Jeder Kombination dieser drei Spannungen entspricht genau ein Drehwinkel ϕ, der aus einer Tabelle interpoliert wird, die aus in einem digitalen Speicher einer elektrischen Auswerteschaltung in Form eines Mikroprozessors gespeichert ist.

Eine erfindungsgemäße Prothese umfasst bevorzugt zwei gegeneinander um einen Schwenkwinkel verschwenkbare Elemente. Handelt es sich bei der Prothese beispielsweise um eine Knieprothese, so sind die beiden Schenkel der Oberschenkel (Schaft) und der Unterschenkel. Die beiden Schenkel der Prothese werden so miteinander verbunden, dass ein Schwenken der beiden Schenkel gegeneinander auf eineindeutige Weise eine Drehung der Verbindungsvorrichtung relativ zu den Segmenten bewirkt.

In anderen Worten führt ein Schwenken der beiden Schenkel zueinander zu einer Bewegung der Verbindungsvorrichtung des Potentiometers relativ zu den Segmenten und umgekehrt kann eine Drehbewegung der Verbindungsvorrichtung des Potentiometers relativ zu den Segmenten des Potentiometers nur dann erfolgen, wenn die beiden Schenkel gegeneinander bewegt werden.

Mit Hilfe des Potentiometers kann dann, wie oben beschrieben, der Winkel bestimmt werden, unter dem beispielsweise der Unterschenkel relativ zum Oberschenkel orientiert ist. Handelt es sich bei der erfindungsgemäßen Prothese beispielsweise um eine Unterarmprothese, so sind die beiden Schenkel der Oberarm (Stumpf) und der Unterarm. Ist die Prothese eine Fingerprothese, gilt entsprechendes.

Besonders günstig ist es, wenn die Segmente und der flexible Leiter von einer flexiblen Umhüllung flüssigkeitsdicht umgeben sind. In diesem Fall kann die Prothese in Wasser getaucht werden, ohne dass ein Kurzschluss zu befürchten ist. Es ist möglich, dass das Potentiometer eine elektrische Steuerung umfasst, die eingerichtet ist zum Ermitteln der Drehposition des Potentiometers. Die elektrische Steuerung ist dann vorzugsweise ebenfalls von der Umhüllung umgeben. Es ist möglich, dass die Steuerung ausgebildet ist, um die Drehposition kodiert drahtlos oder drahtgebunden nach außerhalb der Umhüllung zu senden.

### Bezugszeichenliste

- 10: Potentiometer
- 12.1, 12.2, 12.3, 12.4, 12.5, 12.6: Segment
- 14: Kontaktseite
- 16: Kante
- 18: erster Abschnitt

- 20: zweiter Abschnitt
- 22: elektrischer Kontakt
- 24: Stromquelle
- 26: Träger
- 28: innerer Abstandsring

- 30: äußerer Abstandsring
- 32: Druckmembran
- 34: flexibler Leiter
- 36: Koppeleinrichtung
- 38: Verbindungsvorrichtung

- 40: erster Arm
- 42: zweiter Arm
- 44: dritter Arm
- 46: erster Bestromungskontakt
- 48: zweiter Bestromungskontakt
- 50: Messkontakt

- I: Strom
- Kufen: äußerer Kreisringradius
- Kinnen: innerer Kreisringradius
- M: Mittelpunkt
- ϕ: Drehwinkel

- α: Spreizwinkel
- β: Weiterschaltwinkel
- P₁, P₂, P₃: Punkt
- r: Widerstand
- U: Spannung

## Patentansprüche

1. Potentiometer, mit
(a) mindestens zwei elektrisch leitenden Segmenten (12),
- die jeweils eine Kontaktseite (14) aufweisen, die von einer umlaufenden Kante (16) berandet wird,
- die jeweils mit einem Abschnitt (18, 20) ihrer Kanten (16) bündig aneinander angrenzen und eine geschlossene, insbesondere eine ringförmig geschlossene, Anordnung bilden,
(b) einer Verbindungsvorrichtung (38) zum elektrischen Verbinden eines ersten Kontaktpunkts (P₁) in einem ersten Segment mit mindestens einem zweiten Kontaktpunkt (P2, P3) in einem von dem ersten Segment verschiedenen, zweiten Segment,
**dadurch gekennzeichnet, dass**
(c) zwischen jeweils zwei Segmenten (12) stets ein elektrischer Kontakt (22) angeordnet ist.

2. Potentiometer nach einem der vorstehenden Ansprüche, **gekennzeichnet durch** elektrische Kontakte (22), über die ein **durch** alle Segmente fließender elektrischer Strom (I) einprägbar ist.

3. Potentiometer nach einem der vorstehenden Ansprüche, **dadurch gekennzeichnet, dass** die Kontaktseiten (14) eben sind und in einer gemeinsamen Kontaktseitenebene liegen.

4. Potentiometer nach einem der vorstehenden Ansprüche, **dadurch gekennzeichnet, dass** jedes Segment (12) an genau zwei Nachbarn bündig angrenzt und mit den beiden Nachbarn an Stellen, an denen sie bündig aufeinander angrenzen, elektrischen Kontakt hat.

5. Potentiometer nach einem der vorstehenden Ansprüche, **dadurch gekennzeichnet, dass** die Segmente (12) Kreisringsegmente sind, wobei die Segmente (12) jeweils gleich groß sind und der spezifische elektrische Widerstand in einem Segment (12) konstant ist.

6. Potentiometer nach einem der vorstehenden Ansprüche, **dadurch gekennzeichnet, dass** die Verbindungsvorrichtung (38) genau zwei Kontaktpunkte (P1, P2) verbindet.

7. Potentiometer nach einem der vorstehenden Ansprüche 5 oder 6, **dadurch gekennzeichnet, dass** die Verbindungsvorrichtung (38) in einem Drehpunkt (M) drehbar gelagert ist und der Drehpunkt (M) mit einem Kreisringmittelpunkt zusammenfällt, wobei die Verbindungsvorrichtung (38) so ausgebildet ist, dass der erste Kontaktpunkt (P1) von dem zweiten Kontaktpunkt (P2) um einen Spreizwinkel (a) versetzt angeordnet ist, der so groß ist, dass die Kontaktpunkte (P1, P2) nicht in einem Segment (12) liegen können.

8. Potentiometer nach einem der vorstehenden Ansprüche, **dadurch gekennzeichnet, dass** die Verbindungsvorrichtung (38) einen geschlossenen, flexiblen Leiter (34) umfasst, der so zu den elektrisch leitenden Segmenten (12) angeordnet ist, dass er durch Druck in einem Kontaktpunkt (P1, P2) in elektrischen Kontakt mit einem der Segmente (12) bringbar ist,

9. Potentiometer nach Anspruch 8, **gekennzeichnet durch** eine Koppeleinrichtung (36) zum Aufbringen eines Drucks auf den flexiblen Leiter (34) an mindestens zwei Kontaktpunkten (P1, P2).

10. Potentiometer nach einem der vorstehenden Ansprüche, **gekennzeichnet durch** eine Spannungsermittlungsvorrichtung und eine Steuerung, die ausgebildet ist zum elektrischen Verbinden von jeweils zwei Kontakten (22) mit einer Stromquelle oder Spannungsquelle und von jeweils mindestens einem, insbesondere jeweils zwei, Kontakten (22) mit der Spannungsermittlungsvorrichtung.

11. Potentiometer nach einem der Ansprüche 1 bis 5 oder 7 bis 10, **dadurch gekennzeichnet, dass** die Verbindungsvorrichtung (38) ausgebildet ist, um den ersten Kontaktpunkt (P1) in dem ersten Segment mit dem zweiten Kontaktpunkt (P2) in dem vom ersten Segment verschiedenen zweiten Segment und genau einem dritten Kontaktpunkt (P3) zu verbinden, wobei alle drei Kontaktpunkte (P1, P2, P3) stets in unterschiedlichen Segmenten (12) liegen.

12. Potentiometer nach Anspruch 11, **dadurch gekennzeichnet, dass** die Verbindungsvorrichtung (38) einen ersten Arm (40), einen zweiten Arm (42) und einen dritten Arm (44) aufweist, wobei der erste Arm (40) und der zweite Arm (42) über je einen Bestromungskontakt (46, 48) mit einer Stromquelle verbindbar sind und wobei der dritte Arm (44) über einen Messkontakt (50) mit der Spannungsermittlungsvorrichtung verbindbar ist, wobei die drei Arme (40, 42, 44) elektrisch gegeneinander isoliert sind.

13. Potentiometer nach einem der vorstehenden Ansprüche, **dadurch gekennzeichnet, dass** zumindest zwei benachbarte, insbesondere alle, Segmente (12) unterschiedliche spezifische elektrische Widerstände haben.

14. Prothese, insbesondere Arm- oder Handprothese, mit einem Potentiometer (10) nach einem der vorstehenden Ansprüche.

15. Verfahren zum Ermitteln einer Winkellage eines Bauteils mit den Schritten:
(a) mechanisches Verbinden des Bauteils mit einer Verbindungsvorrichtung (38) oder den Segmenten (12) eines Potentiometers (10) nach einem der vorstehenden Ansprüche,
(b) Verbinden einer Stromquelle oder einer Spannungsquelle mit dem Potentiometer (10), so dass ein elektrischer Strom (I) durch mindestens ein Segment (12) fließt,
(c) Ermitteln mindestens einer ersten Spannung (Ul,Umess), die aufgrund des Stroms (I) über einem Teil des Potentiometers (10) abfällt.
(d) aus der mindestens einen Spannung Ermitteln einer Drehposition der Verbindungsvorrichtung (38) und
(e) aus der Drehposition (f) der Verbindungsvorrichtung (38) Ermitteln der Winkellage des Bauteils.

## Claims

1. A potentiometer with
(a) at least two electrically conductive segments (12),
- which each comprise a contact side (14) that is bordered by an edge (16),
- which each sit flush by one another with a section (18, 20) of their edges (16) and form a closed, particularly a closed ring-shaped, arrangement,
(b) a connecting device (38) to electrically connect a first contact point (P1) in a first segment with at least a second contact point (P2, P3) in a second segment that is different to the first segment,
**characterized by** the fact that
(c) an electrical contact (22) is always arranged between each of the two segments (12).

2. The potentiometer according to one of the above claims, **characterized by** electrical contacts (22) via which an electrical current (I) can be passed through all segments.

3. The potentiometer according to one of the above claims, **characterized by** the fact that the contact sides (14) are even and are situated at a common contact side level.

4. The potentiometer according to one of the above claims, **characterized by** the fact that each segment (12) sits flush against exactly two neighbours and has electrical contact with the two neighbours at points where they sit flush against one another.

5. The potentiometer according to one of the above claims, **characterized by** the fact that the segments (12) are circular segments, the segments (12) each being equal in size and the specific electrical resistance in one segment (12) being constant.

6. The potentiometer according to one of the above claims, **characterized by** the fact that the connecting device (38) connects exactly two contact points (P1, P2).

7. The potentiometer according to one of the above claims 5 or 6, **characterized by** the fact that the connecting device (38) is mounted in a pivot (M) in such a way that it can be rotated, and the pivot (M) coincides with a centre of a ring, the connecting device (38) being designed in such a way that the first contact point (P1) is arranged offset from the second contact point (P2) at a spread angle (a) which is so large that the contact points (P1, P2) cannot be located in one segment.

8. The potentiometer according to one of the above claims, **characterized by** the fact that the connecting device (38) comprises a closed, flexible conductor (34) which is arranged in relation to the electrically conductive segments (12) in such a way that electrical contact can be made with one of the segments (12) by means of the pressure at one contact point (P1, P2).

9. The potentiometer according to claim 8, **characterized by** a coupling device (36) to apply pressure on the flexible conductor (34) an at least two contact points (P1, P2).

10. The potentiometer according to one of the above claims, **characterized by** a voltage determination device and a control system that is designed to electrically connect two contacts (22) with a voltage source or current source and at least one, in particular two, contacts (22) with the voltage determination device.

11. The potentiometer according to one of the claims 1 to 5 or 7 to 10, **characterized by** the fact that the connecting device (38) is designed to connect the first contact point (P1) in the first segment with the second contact point (P2) in the second segment, which is different to the first segment, and to connect exactly a third contact point (P3), with all three contact points (P1, P2, P3) always being located in different segments.

12. The potentiometer according to claim 11, **characterized by** the fact that the connecting device (38) comprises a first arm (40), a second arm (42) and a third arm (44), the first arm (40) and the second arm (42) each being able to connect with a power source via a current contact (46, 48), and the third arm (44) being able to connect with the voltage determination device via a measuring contact (50), the three arms (40, 42, 44) being electrically insulated from each other.

13. The potentiometer according to one of the above claims, **characterized by** the fact that at least two adjacent, especially all, segments (12) have different electrical resistances.

14. A prothesis, in particular a prosthetic arm or hand, with a potentiometer (10) according to one of the above claims.

15. A process to calculate an angle position of a component with the steps:
(a) the component is mechanically connected to a connecting apparatus (38) or the segments (12) of a potentiometer (10) as claimed in one of the preceding claims,
(b) a current source or a voltage source is connected to the potentiometer (10), so that an electric current (I) flows through at least one segment (12),
(c) at least one first voltage (U1, Umess) which drops across a portion of the potentiometer (10) on the basis of the current (I) is ascertained"
(d) the at least one voltage is used to ascertain a rotary position for the connecting apparatus (38), and
(e) the rotary position (ϕ) of the connecting apparatus (38) is used to ascertain the angular position of the component.

## Revendications

1. Potentiomètre, comprenant
(a) au moins deux segments électriquement conducteurs (12),
- qui présentent chacun un côté contact (14) qui est bordé par une arête périphérique (16),
- qui sont mutuellement adjacents en affleurement respectivement avec un tronçon (18, 20) de leurs arêtes (16) et forment un agencement fermé, en particulier un agencement fermé de forme annulaire,
(b) un dispositif de connexion (38) pour la connexion électrique d'un premier point de contact (P1) dans un premier segment avec au moins un second point de contact (P2, P3) dans un second segment différent du premier segment,
**caractérisé en ce que**
(c) un contact électrique (22) est toujours agencé entre deux segments respectifs (12).

2. Potentiomètre selon l'une des revendications précédentes, **caractérisé par** des contacts électriques (22) via lesquels peut être appliqué un courant électrique (I) qui s'écoule à travers tous les segments.

3. Potentiomètre selon l'une des revendications précédentes, **caractérisé en ce que** les côtés contact (14) sont plans et sont situés dans un plan de contact commun.

4. Potentiomètre selon l'une des revendications précédentes, **caractérisé en ce que** chaque segment (12) est adjacent en affleurement avec exactement deux voisins, et est en contact électrique avec les deux voisins à des emplacements auxquels ils sont mutuellement adjacents en affleurement.

5. Potentiomètre selon l'une des revendications précédentes, **caractérisé en ce que** les segments (12) sont des segments annulaires, lesdits segments (12) étant respectivement de même taille, et la résistance électrique spécifique dans un segment (12) est constante.

6. Potentiomètre selon l'une des revendications précédentes, **caractérisé en ce que** le dispositif de connexion (38) connecte exactement deux points de contact (P1, P2).

7. Potentiomètre selon l'une des revendications précédentes 5 ou 6, **caractérisé en ce que** le dispositif de connexion (38) est monté avec possibilité de rotation autour d'un centre de rotation (M), et le centre de rotation (M) coïncide avec un centre de l'anneau, et le dispositif de connexion (38) est ainsi réalisé que le premier point de contact (P1) est agencé en décalage du second point de contact (P2) à raison d'un angle d'écartement (a) qui est aussi grand que les points de contact (P1, P2) ne peuvent pas trouver dans un segment (12).

8. Potentiomètre selon l'une des revendications précédentes, **caractérisé en ce que** le dispositif de connexion (38) comprend un conducteur flexible fermé (34), lequel est agencé par rapport aux segments électriquement conducteurs (12) de telle façon qu'il peut être amené en contact électrique avec l'un des segments (12) par une pression en un point de contact (P1, P2).

9. Potentiomètre selon la revendication 8, **caractérisé par** un dispositif de couplage (36) pour appliquer une pression sur le conducteur flexible (34) en au moins deux points de contact (P1, P2).

10. Potentiomètre selon l'une des revendications précédentes, **caractérisé par** un dispositif de détermination de tension et une commande qui est réalisée pour connecter électriquement respectivement deux contacts (22) avec une source de courant ou une source de tension, et pour connecter respectivement au moins un, et en particulier respectivement deux, contact(s) (22) avec le dispositif de détermination de tension.

11. Potentiomètre selon l'une des revendications 1 à 5 ou 7 à 10, **caractérisé en ce que** le dispositif de connexion (38) est réalisé pour connecter le premier point de contact (P1) dans le premier segment avec le second point de contact (P2) dans le second segment, différent du premier segment, et exactement un troisième point de contact (P3), tous les trois points de contact (P1, P2, P3) étant toujours situés dans des segments différents (12).

12. Potentiomètre selon la revendication 11, **caractérisé en ce que** le dispositif de connexion (38) comprend un premier bras (40), un second bras (42) et un troisième bras (44), tels que le premier bras (40) et le second bras (42) peuvent être connectés à une source de courant via un contact d'alimentation respectif (46, 48), et tel que le troisième bras (44) peut être connecté avec le dispositif de détermination de tension via un contact de mesure (30), et les trois bras (40, 42, 44) sont isolés électriquement les uns par rapport aux autres.

13. Potentiomètre selon l'une des revendications précédentes, **caractérisé en ce qu'**au moins deux segments voisins (12), en particulier tous les segments, ont des résistances électriques spécifiques différentes.

14. Prothèse, en particulier prothèse du bras ou prothèse de la main, comprenant un potentiomètre (10) selon l'une des revendications précédentes.

15. Procédé pour déterminer une position angulaire d'un composant, comportant les étapes consistant à :
(a) connecter mécaniquement le composant avec un dispositif de connexion (38) ou avec les segments (12) d'un potentiomètre (10) selon l'une des revendications précédentes,
(b) connecter une source de courant ou une source de tension avec le potentiomètre (10), de telle sorte qu'un courant électrique (I) s'écoule à travers au moins un segment (12),
(c) déterminer au moins une première tension (U1, Umess) qui diminue en raison du courant (I) sur une partie du potentiomètre (10),
(d) déterminer à partir de ladite au moins une tension, une position en rotation du dispositif de connexion (38), et
(e) déterminer la position angulaire du composant à partir de la position en rotation (f) du dispositif de connexion (38).
